# NEW EUROPEAN PATENT SPECIFICATION

(11) **EP 2 644 993 B2**
(45) Date of publication and mention of the opposition decision: **22.02.2023**
(45) Mention of the grant of the patent: 18.03.2015
(21) Application number: 13161054.5
(22) Date of filing: 26.03.2013
(51) Int. Cl.: F23J 15/04

(54) **Method and arrangement for transferring heat from flue gas into fluid**
Verfahren und Anordnung zum Übertragen von Wärme aus Rauchgas in ein Fluid
Procédé et agencement pour transférer la chaleur d'un gaz de combustion vers un fluide

(30) Priority: 26.03.2012 FI 20125341
(43) Date of publication of application: 02.10.2013
(60) Divisional application: 15155223.9
(73) Proprietor: Elomatic Oy, 20810 Turku (FI)
(72) Inventor: Nummila, Mika, 40200 Jyväskylä (FI)
(74) Representative: Berggren Oy

(56) References cited:
- EP-A1- 1 816 397
- DE-A1- 3 607 356

## Description

### TECHNICAL FIELD OF THE INVENTION

The present invention relates to a method for transferring heat from flue gas into fluid according to the preamble of the appended independent claim.

### BACKGROUND OF THE INVENTION

Flue gas scrubbers are widely used in heating and power plants for recovering heat from flue gas which is produced in the combustion of a fuel. In a flue gas scrubber, the flue gas is cooled so that water vapour contained in the flue gas condenses and the released condensing heat may be utilised. For example, in a district heating plant the condensing heat is used to heat district heating water.

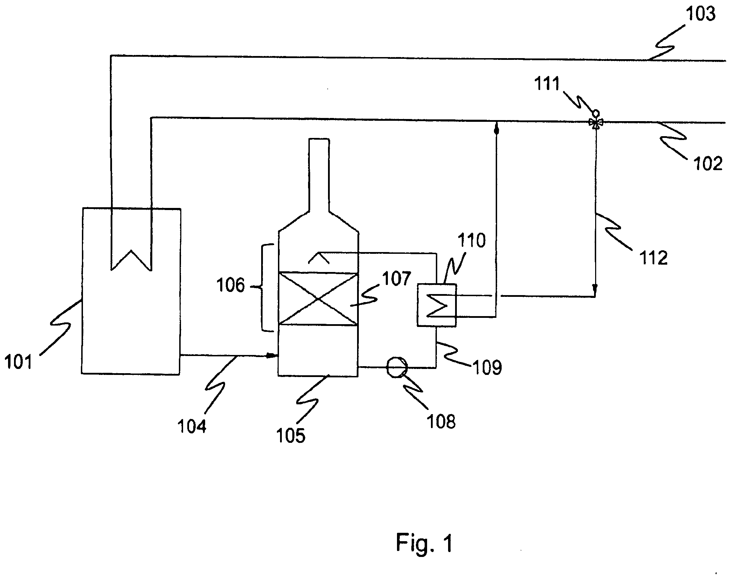

Fig. 1 illustrates a known district heating plant. The plant comprises a heating boiler 101 in which fuel, such as biomass or fossil fuel, is burned. The fuel, as well as the air that is needed in the combustion process, are supplied in a controlled manner into the heating boiler 101. The heat energy that is released in the combustion of the fuel is used to heat water that flows in a district heating network. The water to be heated is supplied to the heating boiler 101 through a return pipe 102, and the heated water is supplied back to the district heating network through a supply pipe 103. The district heating network distributes the heat for residential and commercial heating requirements such as space heating and water heating.

The combustion of the fuel produces flue gas which is led from the heating boiler 101 through a pipe 104 into a flue gas scrubber 105. In the flue gas scrubber 105, the flue gas is passed through a heat exchange zone (also called a packing zone) 106 which comprises a random packing bed 107 acting as a heat and mass transfer surface. The flue gas is cooled by spraying scrubbing water over the packing bed 107, as a result of which heat is released from the flue gas and recovered into the scrubbing water. The scrubbing water is circulated by using a pump 108 through a circulating pipe 109 from the flue gas scrubber 105 into a heat exchanger 110, and back to the flue gas scrubber 105.

The return water of the district heating network is divided into two portions by a three-way valve 111. The first portion of the return water is circulated via a pipe 112 through the heat exchanger 110 and then combined with the second portion of the return water. In the heat exchanger 110, heat from the scrubbing water is transferred into the first portion of the return water. The temperature of the scrubbing water that is circulated back to the flue gas scrubber 105 depends on the temperature of the first portion of the return water.

The amount of heat that is released in the scrubbing process depends on the temperature of the scrubbing water, and the dew point of the flue gas. The dew point depends on the moisture content of the flue gas. If the flue gas can be cooled under its dew point, the water vapour contained in the flue gas condenses and a large amount of heat is released and recovered into the scrubbing water. In a case where the flue gas cannot be cooled under its dew point, the flue gas scrubber acts as a humidifier and the efficiency of the heat recovery process is poor.

A drawback of the known district heating plant according to fig. 1 is that its heat recovery efficiency is in many situations poor due to the fact that the flue gas cannot be cooled under its dew point in the flue gas scrubber.

A known solution to improve the efficiency of the district heating plant according to fig. 1 is to equip the plant with a combustion air humidifier. The combustion air humidifier improves the heat recovery capacity by increasing the moisture content of the flue gas and by leading the return water from the combustion air humidifier to another heat exchange zone of the flue gas scrubber in order to further cool the flue gas.

The combustion air humidifier is, however, known to have some drawbacks, such as corrosion problems in a heating boiler due to the increased moisture content, a relatively high pressure drop over the combustion air system and condensation problems in the combustion air system.

EP 1816397 discloses a method according to the preamble of claim 1.

### OBJECTIVES OF THE INVENTION

It is the main objective of the present invention to reduce or even eliminate prior art problems presented above.

It is an objective of the present invention to provide a method for recovering heat from flue gas. In more detail, it is an objective of the invention to provide a method enabling to efficiently transfer heat from flue gas into fluid, such as water of a district heating network. It is still a further objective of the invention to provide a method enabling to cost-effectively recover heat from flue gas.

In order to realise the above-mentioned objectives, the method according to the invention is characterised by what is presented in the characterising portion of the appended independent claim. Advantageous embodiments of the invention are described in the dependent claims.

### DESCRIPTION OF THE INVENTION

A method for transferring heat from flue gas into fluid according to the invention comprises passing the flue gas through a flue gas scrubber, cooling the flue gas in the flue gas scrubber with scrubbing liquid, circulating scrubbing liquid from the flue gas scrubber into a first heat exchanger and back to the flue gas scrubber, and passing a first portion of the fluid through the first heat exchanger, whereby heat from the scrubbing liquid is transferred into the first portion of the fluid. A method according to the invention further comprises circulating scrubbing liquid from the flue gas scrubber into a second heat exchanger and back to the flue gas scrubber, passing a second portion of the fluid through the second heat exchanger, whereby heat from the scrubbing liquid is transferred into the second portion of the fluid, and before passing the first portion of the fluid through the first heat exchanger, transferring heat from the first portion of the fluid into the second portion of the fluid with a heat pump.

In a method according to the invention the fluid, such as district heating water, is divided into portions which are arranged to flow along different flow paths. The first portion of the fluid is cooled before it is passed through the first heat exchanger, and the released heat (i.e. heat energy) is transferred into the second portion of the fluid. The fluid is preferably divided into two portions. The first portion of the fluid may be, for example, 10-20 %, 20-40 % or 40-70 % of the flow of the fluid, and it can be adjusted, for example, according to the temperature of the fluid.

Because the first portion of the fluid is cooled before it passes through the first heat exchanger, the temperature of the scrubbing liquid that is circulated from the first heat exchanger back to the flue gas scrubber is lower compared to a method in which the fluid is not cooled. This has the benefit of allowing the flue gas to be cooled in the flue gas scrubber to a lower temperature, which improves the heat recovery capacity of the flue gas scrubber. Because in a method according to the invention the flue gas can be cooled to a lower temperature, more condensation heat can be released and recovered into the scrubbing liquid. Another advantage of a method according to the invention is that the heat which is released in a cooling process from the first portion of the fluid is transferred back to the fluid. This improves the efficiency even further.

A method according to the invention can be applied in various types of heating and power plants. Especially the invention can be applied in a district heating plant which comprises a heating boiler for heating water that flows in a district heating network. In the heating boiler fuel is burned and the released heat is transferred into the district heating water. Flue gas which is produced in the combustion of the fuel is passed through a flue gas scrubber. With the method according to the invention heat from the flue gas can be efficiently recovered into the district heating water.

According to an embodiment of the invention the step of transferring heat from the first portion of the fluid into the second portion of the fluid comprises passing the first portion of the fluid through an evaporator of the heat pump wherein heat is transferred from the first portion of the fluid into a cooling media which circulates between the evaporator and a condenser, and passing the second portion of the fluid through the condenser of the heat pump wherein heat is transferred from the cooling media into the second portion of the fluid.

The evaporator and the condenser form a heat pump in which heat is transferred by using the cooling media, such as ammonia (NH₃, R717). In the evaporator the cooling media evaporates into a gas. The gas is compressed to a higher pressure level and at the same time its temperature is increased. In the condenser the gas condenses and the condensing heat is transferred into the second portion of the fluid.

Because the heat pump operates with a relatively low differential temperature, very high COP (coefficient of performance) values can be achieved. For example, if the cooling media is ammonia, the evaporating temperature is 40 °C, the condensating temperature is 65 °C and the isentropic efficiency of the compressor is 87 %, the COP has a value of 9.6.

According to an embodiment of the invention the method comprises, after passing the first portion of the fluid through the first heat exchanger, combining the first portion of the fluid with the second portion of the fluid. The first portion of the fluid may be combined with the second portion of the fluid after the second portion of the fluid is heated, that is to say after the second portion of the fluid has passed through the condenser of the heat pump. The first portion of the fluid may alternatively be combined with the second portion of the fluid before the second portion of the fluid is heated, whereby also the first portion of the fluid passes through the condenser of the heat pump and is thus also heated.

According to an embodiment of the invention the second portion of the fluid is passed through the second heat exchanger before the heat is transferred from the first portion of the fluid into the second portion of the fluid. An advantage of this is that it improves efficiency because the temperature of the scrubbing liquid that is circulated from the second heat exchanger back to the flue gas scrubber is lower compared to a situation where the heat is transferred into the second portion of the fluid before the second heat exchanger.

According to an embodiment of the invention the flue gas is passed through a first and a second heat exchange zone of the flue gas scrubber. The first and the second heat exchange zone are arranged one on top of the other in the flue gas scrubber. A heat exchange zone comprises a random packing bed acting as a heat and mass transfer surface. The flue gas is cooled by spraying scrubbing liquid over the packing bed, as a result of which the water vapour contained in the flue gas condenses and heat is released from the flue gas.

According to an embodiment of the invention the flue gas is cooled in the first heat exchange zone by the scrubbing liquid circulated through the first heat exchanger, and in the second heat exchange zone by the scrubbing liquid circulated through the second heat exchanger. The first heat exchange zone is arranged above the second heat exchange zone. Therefore, the scrubbing liquid that is circulated from the first heat exchanger and sprayed above the first heat exchange zone passes through both of the heat exchange zones. The scrubbing liquid that is circulated from the second heat exchanger and sprayed above the second heat exchange zone passes only through the second heat exchange zone. The temperature of the scrubbing liquid sprayed above the first heat exchange zone is lower than the temperature of the scrubbing liquid sprayed above the second heat exchange zone. The temperature difference between the scrubbing liquids can be, for example, 10-20 °C. An advantage of providing the coolin g of the flue gas in two heat exchange zones is that the heat pump can be dimensioned for lower capacity and therefore the operating costs are lower.

According to an embodiment of the invention the first portion of the fluid is cooled to a temperature below 42 °C. When the first portio n of the fluid is cooled below 42 °C, the scrubbing liquid that is used for coolin g the flue gas is capable of releasing a large amount of condensation heat from the flue gas.

According to an embodiment of the invention the scrubbing liquid is scrubbing water.

According to an embodiment of the invention the fluid is district heating water. By district heating water is meant water that flows in a district heating network. Preferably, the district heating water that is applied in a method according to the invention is return water of a district heating network, i.e. return district heating water. The return district heating water is water that returns from the district heating network to a district heating plant to be heated. The use of the return district heating water in a method according to the invention is advantageous because the water that returns from the district heating network to be heated in the district heating plant has the lowest temperature within the district heating system.

An unclaimed arrangement comprises a flue gas scrubber configured to cool the flue gas, which is passed through the flue gas scrubber, with scrubbing liquid, and a first heat exchanger coupled to the flue gas scrubber, the first heat exchanger being configured to transfer heat from the scrubbing liquid, which is circulated between the flue gas scrubber and the first heat exchanger, into a first portion of the fluid, the first portion of the fluid being configured to pass through the first heat exchanger. An unclaimed arrangement further comprises a second heat exchanger coupled to the flue gas scrubber, the second heat exchanger being configured to transfer heat from the scrubbing liquid, which is circulated between the flue gas scrubber and the second heat exchanger, into a second portion of the fluid, the second portion of the fluid being configured to pass through the second heat exchanger, and a heat pump coupled to the first heat exchanger, the heat pump being configured to transfer heat from the first portion of the fluid into a second portion of the fluid.

In the flue gas scrubber the flue gas is sprayed with the scrubbing liquid, whereby the water vapour contained in the flue gas condenses and the condensing heat is transferred into the scrubbing liquid. The scrubbing liquid is circulated by using a pump through the first heat exchanger in which the heat contained in the scrubbing liquid is transferred into the first portion of the fluid. The fluid is divided into the first and the second portion, for example, by a control valve. The heat from the first portion of the fluid is transferred to the second portion of the fluid before the first portion of the fluid is supplied to the first heat exchanger.

An unclaimed arrangement can be arranged as a part of various types of heating and power plants. Especially an unclaimed arrangement can be arranged as a part of a district heating plant which comprises a heating boiler for heating district heating water that flows in a district heating network. In the heating boiler the fuel is burned, which produces flue gas. With the unclaimed arrangement the heat contained in the flue gas can be efficiently recovered and transferred into the district heating water.

The heat pump may comprise an evaporator and a condenser wherein the evaporator is coupled to the first heat exchanger, the evaporator being configured to transfer heat from the first portion of the fluid, which is passed through the evaporator, into a cooling media which is configured to circulate between the evaporator and the condenser, and the condenser is configured to transfer heat from the cooling media into the second portion of the fluid, which is passed through the condenser.

The flue gas scrubber may comprise a first heat exchange zone and a second heat exchange zone wherein the scrubbing liquid circulated through the first heat exchanger is configured to cool the flue gas in the first heat exchange zone, and the scrubbing liquid circulated through the second heat exchanger is configured to cool the flue gas in the second heat exchange zone.

The exemplary embodiments of the invention presented in this text are not interpreted to pose limitations to the applicability of the appended claims. The verb "to comprise" is used in this text as an open limitation that does not exclude the existence of also unrecited features. The features recited in the dependent claims are mutually freely combinable unless otherwise explicitly stated.

### BRIEF DESCRIPTION OF THE DRAWINGS

The novel features which are considered as characteristic of the invention are set forth in particular in the appended claims. The invention itself together with additional objects and advantages thereof, will be best understood from the following description of specific embodiments when read in connection with the accompanying drawings.
- Fig. 1: illustrates a district heating plant according to the prior art,
- fig. 2: illustrates a district heating plant comprising a heat recovery arrangement according to a first unclaimed example,
- fig. 3: illustrates a district heating plant comprising a heat recovery arrangement according to a second example, and
- fig. 4: illustrates a district heating plant comprising a heat recovery arrangement according to a third example.

### DETAILED DESCRIPTION OF THE PREFERRED EMBODIMENTS OF THE INVENTION

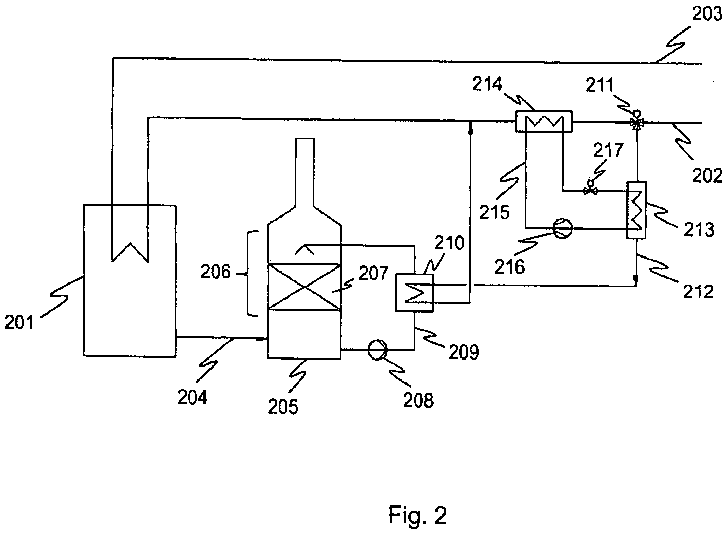

Fig. 1 has been described in detail in the description of the background of the invention. Therefore, the following discussion will focus on figs. 2 to 4.
Fig. 2 illustrates a district heating plant which comprises an arrangement according to a first unclaimed example for transferring heat from flue gas into district heating water. The district heating plant of fig. 2 differs from the district heating plant of fig. 1 in that it comprises a heat pump for cooling district heating water before it is passed through a heat exchanger.

Similarly as in fig. 1, the district heating plant of fig. 2 comprises a heating boiler 201 in which fuel is burned. The fuel and the air that are needed in the combustion process are supplied into the heating boiler 201. The heat energy that is released in the combustion of the fuel is used to heat water that flows in a district heating network. The water to be heated is supplied to the heating boiler 201 through a return pipe 202, and the heated water is supplied back to the district heating network through a supply pipe 203.

The combustion of the fuel produces flue gas which is led from the heating boiler 201 through a pipe 204 into a flue gas scrubber 205. In the flue gas scrubber 205, the flue gas is passed through a heat exchange zone 206 which comprises a random packing bed 207. The flue gas is cooled by spraying scrubbing water over the packing bed 207, as a result of which heat is released from the flue gas and recovered into the scrubbing water. The scrubbing water is circulated by using a pump 208 through a circulating pipe 209 from the flue gas scrubber 205 into a heat exchanger 210, and back to the flue gas scrubber 205.

The return water of the district heating network is divided into two portions by a three-way valve 211. The first portion of the return water is circulated via a pipe 212 through an evaporator 213 and the heat exchanger 210, and then combined with the second portion of the return water. In the heat exchanger 210 heat from the scrubbing water is transferred into the first portion of the return water.

Before the first portion of the return water is passed through the heat exchanger 210, heat from the first portion of the return water is transferred into the second portion of the return water by a heat pump which comprises the evaporator 213 and a condenser 214 through which the first portion and the second portion of the return water are passed, respectively. The evaporator 213 is coupled in connec-tion with the pipe 212 between the three-way valve 211 and the heat exchanger 210. The condenser 214 is coupled in connection with the return pipe 202 between the three-way valve 211 and the point where the first portion of the return water is combined with the second portion of the return water.

In the evaporator 213, heat is transferred from the first portion of the return water into a cooling media which evaporates into a gas. The cooling media is circulated between the evaporator 213 and the condenser 214 in a circulating pipe 215 by a pump 216. The circulating pipe 215 is equipped with a valve 217 for controlling the flow rate of the cooling media. In the condenser 214 the gas condenses and the condensing heat is transferred into the second portion of the return water.

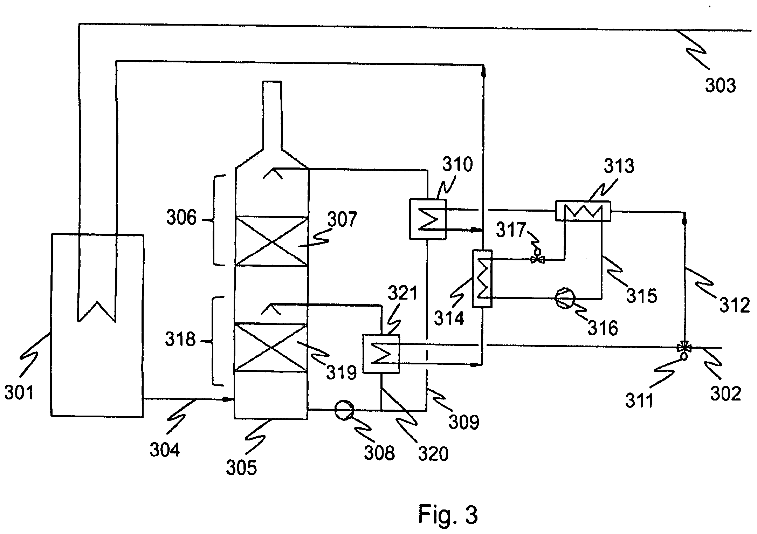

Fig. 3 illustrates a district heating plant which comprises an arrangement according to a second example for transferring heat from flue gas into district heating water. The district heating plant of fig. 3 differs from the district heating plant of fig. 2 in that it comprises another circulation circuit for the scrubbing water.

Similarly as in fig. 2, the district heating plant of fig. 3 comprises a heating boiler 301 in which fuel is burned. The fuel and the air that are needed in the combustion process are supplied into the heating boiler 301. The heat energy that is released in the combustion of the fuel is used to heat water that flows in a district heating network. The water to be heated is supplied to the heating boiler 301 through a return pipe 302, and the heated water is supplied back to the district heating network through a supply pipe 303.

Flue gas is led from the heating boiler 301 through a pipe 304 into a flue gas scrubber 305. The flue gas scrubber 305 comprises a first 306 and a second 318 heat exchange zone which are arranged one on top of the other. The flue gas is passed through the heat exchange zones 306, 318 which comprise random packing beds 307, 319.

The flue gas is cooled by spraying scrubbing water over the packing beds 307, 319, as a result of which heat is released from the flue gas and recovered into the scrubbing water. The scrubbing water is circulated by using a pump 308 through a first circulating pipe 309 from the flue gas scrubber 305 into a first heat exchanger 310, and back to the flue gas scrubber 305 to be sprayed in the first heat exchange zone 306. The scrubbing water is also circulated by using the pump 308 through a second circulating pipe 320 from the flue gas scrubber 305 into a second heat exchanger 321, and back to the flue gas scrubber 305 to be sprayed in the second heat exchange zone 317.

The return water of the district heating network is divided into two portions by a three-way valve 311. The first portion of the return water is circulated via a pipe 312 through an evaporator 313 and the first heat exchanger 310, and then combined with the second portion of the return water. In the first heat exchanger 310 heat from the scrubbing water is transferred into the first portion of the return water. The second portion of the return water is circulated through a second heat exchanger 321 and a condenser 314. In the second heat exchanger 321 heat from the scrubbing water is transferred into the second portion of the return water.

Heat from the first portion of the return water is transferred into the second portion of the return water by a heat pump which comprises the evaporator 313 and the condenser 314. The evaporator 313 is coupled in connection with the pipe 312 between the three-way valve 311 and the first heat exchanger 310. The condenser 314 is coupled in connection with the return pipe 302 between the second heat exchanger 321 and the point where the first portion of the return water is combined with the second portion of the return water.

In the evaporator 313, heat is transferred from the first portion of the return water into a cooling media which evaporates into a gas. The cooling media is circulated between the evaporator 313 and the condenser 314 in a circulating pipe 315 by a pump 316. The circulating pipe 315 is equipped with a valve 317 for controlling the flow rate of the cooling media. In the condenser 314 the gas condenses and the condensing heat is transferred into the second portion of the return water.

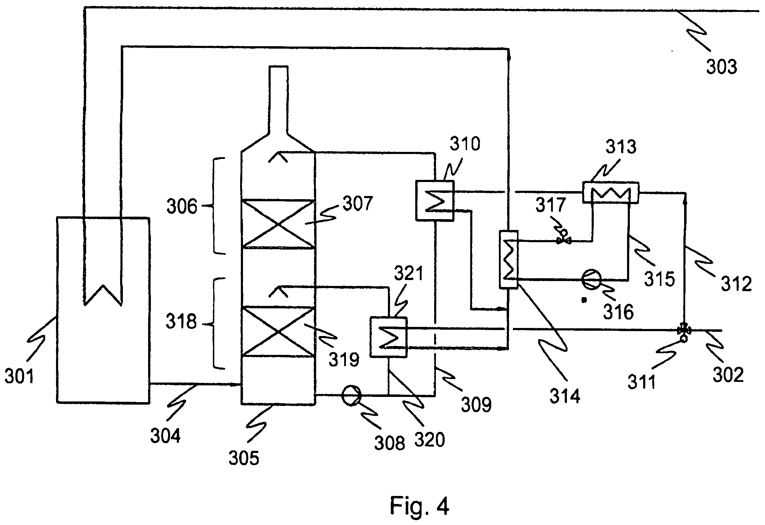

Fig. 4 illustrates a district heating plant which comprises an arrangement according to a third example for transferring heat from flue gas into district heating water. The district heating plant of fig. 4 differs from the district heating plant of fig. 3 only in that the first portion of the return water is combined with the second portion of the return water before the return water is passed through the condenser 314. Thus in the condenser 314 heat is also transferred to the first portion of the return water.

It is clear to a person skilled in the art that the invention is not restricted only to the examples presented above, but the invention may vary within the limits of the claims presented hereafter. Some possible embodiments of the invention are described in the dependent claims, and they are not to be considered to restrict the scope of protection of the invention as such.

## Claims

1. A method for transferring heat from flue gas into fluid, comprising:
- passing the flue gas through a flue gas scrubber (205, 305),
- cooling the flue gas in the flue gas scrubber (205, 305) with scrubbing liquid,
- circulating scrubbing liquid from the flue gas scrubber (205, 305) into a first heat exchanger (210, 310) and back to the flue gas scrubber (205, 305), and
- passing a first portion of the fluid through the first heat exchanger (210, 310), whereby heat from the scrubbing liquid is transferred into the first portion of the fluid;
**characterised in that** the method comprises:
- circulating scrubbing liquid from the flue gas scrubber (305) into a second heat exchanger (321) and back to the flue gas scrubber (305),
- passing a second portion of the fluid through the second heat exchanger (321), whereby heat from the scrubbing liquid is transferred into the second portion of the fluid, and
- before passing the first portion of the fluid through the first heat exchanger (210, 310), transferring heat from the first portion of the fluid into the second portion of the fluid with a heat pump.

2. The method according to claim 1, **characterised in that** the step of transferring heat from the first portion of the fluid into the second portion of the fluid comprises:
- passing the first portion of the fluid through an evaporator (213, 313) of the heat pump wherein heat is transferred from the first portion of the fluid into a cooling media which circulates between the evaporator (213, 313) and a condenser (214, 314), and
- passing the second portion of the fluid through the condenser (214, 314) of the heat pump wherein heat is transferred from the cooling media into the second portion of the fluid.

3. The method according to claim 1 or 2, **characterised in that** the method comprises:
- after passing the first portion of the fluid through the first heat exchanger (210, 310), combining the first portion of the fluid with the second portion of the fluid.

4. The method according to any of the preceding claims, **characterised in that** the second portion of the fluid is passed through the second heat exchanger (321) before the heat is transferred from the first portion of the fluid into the second portion of the fluid.

5. The method according to any of the preceding claims, **characterised in that** the flue gas is passed through a first and a second heat exchange zone (306, 318) of the flue gas scrubber (305).

6. The method according to claim 5, **characterised in that** the flue gas is cooled in the first heat exchange zone (306) by the scrubbing liquid circulated through the first heat exchanger (310), and in the second heat exchange zone (318) by the scrubbing liquid circulated through the second heat exchanger (321).

7. The method according to any of the preceding claims, **characterised in that** the first portion of the fluid is cooled to a temperature below 42 °C.

8. The method according to any of the preceding claims, **characterised in that** the scrubbing liquid is scrubbing water.

9. The method according to any of the preceding claims, **characterised in that** the fluid is district heating water.

## Patentansprüche

1. Verfahren zur Übertragung von Wärme aus einem Abgas in eine Flüssigkeit, umfassend:
- Leiten des Abgases durch einen Abgasreiniger (205, 305),
- Kühlen des Abgases in dem Abgasreiniger (205, 305) mit einer Reinigungsflüssigkeit,
- Zirkulieren der Reinigungsflüssigkeit aus dem Abgasreiniger (205, 305) in einen ersten Wärmetauscher (210, 310) und zurück in den Abgasreiniger (205, 305), und
- Leiten eines ersten Teils der Flüssigkeit durch den ersten Wärmetauscher (210, 310), wobei Wärme aus der Reinigungsflüssigkeit in den ersten Teil der Flüssigkeit übertragen wird, **dadurch gekennzeichnet, dass** das Verfahren umfasst:
- Zirkulieren der Reinigungsflüssigkeit aus dem Abgasreiniger (305) in einen zweiten Wärmetauscher (321) und zurück in den Abgasreiniger (305),
- Leiten eines zweiten Teils der Flüssigkeit durch den zweiten Wärmetauscher (321), wobei Wärme aus der Reinigungsflüssigkeit in den zweiten Teil der Flüssigkeit übertragen wird, und
- vor dem Leiten des ersten Teils der Flüssigkeit durch den ersten Wärmetauscher (210, 310), Übertragen der Wärme aus dem ersten Teil der Flüssigkeit in den zweiten Teil der Flüssigkeit mit einer Wärmepumpe.

2. Verfahren nach Anspruch 1, **dadurch gekennzeichnet, dass** der Schritt zur Übertragung der Wärme aus dem ersten Teil der Flüssigkeit in den zweiten Teil der Flüssigkeit umfasst:
- Leiten des ersten Teils der Flüssigkeit durch einen Verdampfer (213, 313) der Wärmepumpe, wobei Wärme aus dem ersten Teil der Flüssigkeit in ein Kühlmedium übertragen wird, das zwischen dem Verdampfer (213, 313) und einem Kondensator (214, 314) zirkuliert, und
- Leiten des zweiten Teils der Flüssigkeit durch den Kondensator (214, 314) der Wärmepumpe, wobei Wärme aus dem Kühlmedium in den zweiten Teil der Flüssigkeit übertragen wird.

3. Verfahren nach Anspruch 1 oder 2, **dadurch gekennzeichnet, dass** das Verfahren umfasst:
- nach dem Leiten des ersten Teils der Flüssigkeit durch den ersten Wärmetauscher (210, 310), Mischen des ersten Teils der Flüssigkeit mit dem zweiten Teil der Flüssigkeit.

4. Verfahren nach einem der vorhergehenden Ansprüche, **dadurch gekennzeichnet, dass** der zweite Teil der Flüssigkeit durch den zweiten Wärmetauscher (321) geleitet wird, bevor die Wärme aus dem ersten Teil der Flüssigkeit in den zweiten Teil der Flüssigkeit übertragen wird.

5. Verfahren nach einem der vorhergehenden Ansprüche, **dadurch gekennzeichnet, dass** das Abgas durch einen ersten und einen zweiten Wärmetauscherbereich (306, 318) des Abgasreinigers (305) geleitet wird.

6. Verfahren nach Anspruch 5, **dadurch gekennzeichnet, dass** das Abgas in dem ersten Wärmetauscherbereich (306) durch die Reinigungsflüssigkeit, die durch den ersten Wärmetauscher (310) zirkuliert, und in dem zweiten Wärmetauscherbereich (318) durch die Reinigungsflüssigkeit, die durch den zweiten Wärmetauscher (321) zirkuliert, gekühlt wird.

7. Verfahren nach einem der vorhergehenden Ansprüche, **dadurch gekennzeichnet, dass** der erste Teil der Flüssigkeit auf eine Temperatur unter 42°C gekühlt wird.

8. Verfahren nach einem der vorhergehenden Ansprüche, **dadurch gekennzeichnet, dass** die Reinigungsflüssigkeit Reinigungswasser ist.

9. Verfahren nach einem der vorhergehenden Ansprüche, **dadurch gekennzeichnet, dass** die Flüssigkeit Bezirksheizwasser ist.

## Revendications

1. Procédé pour transférer la chaleur d'un gaz de combustion vers un fluide, comprenant :
- un passage du gaz de combustion à travers un épurateur de gaz de combustion (205, 305),
- un refroidissement du gaz de combustion dans l'épurateur de gaz de combustion (205, 305) avec du liquide d'épuration,
- une circulation du liquide d'épuration depuis l'épurateur de gaz de combustion (205, 305) vers un premier échangeur de chaleur (210, 310) et un retour à l'épurateur de gaz de combustion (205, 305), et
- un passage d'une première partie du fluide à travers le premier échangeur de chaleur (210, 310), grâce auquel la chaleur du liquide d'épuration est transférée dans la première partie du fluide ;
**caractérisé en ce que** le procédé comprend :
- une circulation du liquide d'épuration depuis l'épurateur de gaz de combustion (305) dans un deuxième échangeur de chaleur (321) et un retour à l'épurateur de gaz de combustion (305),
- un passage d'une deuxième partie du fluide à travers le deuxième échangeur de chaleur (321), grâce auquel la chaleur du liquide d'épuration est transférée dans la deuxième partie du fluide, et
- préalablement au passage de la première partie du fluide à travers le premier échangeur de chaleur (210, 310), un transfert de chaleur de la première partie du fluide dans la deuxième partie du fluide avec la pompe à chaleur.

2. Procédé selon la revendication 1, **caractérisé en ce que** l'étape de transfert de chaleur de la première partie du fluide dans la deuxième partie du fluide comprend :
- un passage de la première partie du fluide à travers un évaporateur (213, 313) de la pompe à chaleur dans lequel la chaleur est transférée de la première partie du fluide dans un milieu de refroidissement qui circule entre l'évaporateur (213, 313) de la pompe à chaleur et un condenseur (214, 314), et
- un passage de la deuxième partie du fluide à travers le condenseur (214, 314) dans lequel la chaleur est transférée du milieu de refroidissement dans la deuxième partie du fluide.

3. Procédé selon la revendication 1 ou 2, **caractérisé en ce que** le procédé comprend :
- postérieurement au passage de la première partie du fluide à travers le premier échangeur de chaleur (210, 310), une combinaison de la première partie du fluide avec la deuxième partie du fluide.

4. Procédé selon l'une quelconque des revendications précédentes, **caractérisé en ce que** la deuxième partie du fluide est passée à travers le deuxième échangeur de chaleur (321) préalablement au transfert de la chaleur de la première partie du fluide à la deuxième partie du fluide.

5. Procédé selon l'une quelconque des revendications précédentes, **caractérisé en ce que** le gaz de combustion est passé à travers une première et une seconde zones d'échange de chaleur (306, 318) de l'épurateur de gaz de combustion (305).

6. Procédé selon la revendication 5, **caractérisé en ce que** le gaz de combustion est refroidi dans la première zone d'échange de chaleur (306) par le liquide d'épuration circulant à travers le premier échangeur de chaleur (310), et dans la deuxième zone d'échange de chaleur (318) par le liquide d'épuration circulant à travers le deuxième échangeur de chaleur (321).

7. Procédé selon l'une quelconque des revendications précédentes, **caractérisé en ce que** la première partie du fluide est refroidie à une température en dessous de 42°C.

8. Procédé selon l'une quelconque des revendications précédentes, **caractérisé en ce que** le liquide d'épuration est de l'eau d'épuration.

9. Procédé selon l'une quelconque des revendications précédentes, **caractérisé en ce que** le fluide est de l'eau de chauffage urbain.
